# EUROPEAN PATENT APPLICATION

(11) **EP 1 906 666 A2**
(43) Date of publication of application: **02.04.2008**
(21) Application number: 06807869.0
(22) Date of filing: 19.07.2006
(51) Int. Cl.: H04N 7/14, H04M 11/08

(54) **SYSTEM FOR LIVE TELEVISION BROADCASTING FROM A MOBILE TELEPHONE**

(30) Priority: 20.07.2005 ES 200501769; 17.07.2006 ES 200601898
(71) Applicant: Createcna XXI S.L., 28013 Madrid (ES)
(72) Inventor: CASAOS, José María, E-28013 Madrid (ES)
(74) Representative: Pereira Toña, Maria Irache
(86) International application number: PCT/ES2006/000421
(87) International publication number: WO 2007/010070

(57) **Abstract**

The invention relates to a system for live television broadcasting from a mobile telephone. The inventive system comprises: a mobile telephone (1) with UMTS technology, a server (4) with software for receiving a call over the Internet and for transmitting the video signal by means of a card with an SDI output, and the television broadcasting/management infrastructure (5). According to the invention, the audio signal (6) and the video signal (7) are separated. Once both signals are at the server (4), they are sent to a production centre (5) and, from there, transmitted live on television (9) or stored, edited, etc. When the images and the audio signal are transmitted through the mobile phone (1) using video-calling, the system includes a gateway (10) which transforms said audio and video packets into an IP stream such that they can travel over the Internet (3) and reach the server (4).

## Description

### Object of the Invention

As expressed in the title of the present specification the present invention relates to a system allowing live television broadcasting from a mobile telephone.

More specifically, the object of the invention consists of broadcasting the video and audio signal coming from a mobile telephone provided with UMTS, also known as 3G, technology live on television, thus allowing any person to use the mobile telephone as a video camera as if he or she was a "television reporter", being able to send the signal to a central server which in turn is able to use the signal as desired (broadcasting, recording, editing, etc.)

### Field of the Invention

This invention is applied in the telecommunications industry in general and the television industry in particular.

### Background of the Invention

In reference to the state of the art, it must be mentioned that the British television channel, the BBC, has had certain experiences of the type that are relevant here, of files recorded with a 3G mobile, which were later transmitted and subsequently broadcast on the programs, but never live.

In addition there are applications using UMTS technology that also allow making video-calls by means of using a mobile telephone in real time, but they can not be broadcast on TV since they are not compatible with television equipment.

Therefore it is worth pointing out that the applicant is unaware of the existence of a system for live television broadcasting from a mobile telephone.

### Description of the Invention

The system for live television broadcasting from a mobile telephone proposed by the invention allows a mobile telephone provided with 3G (Third Generation) technology to broadcast images on television and live through the built-in camera.

To that end, the system is made up of the following parts:
- A mobile telephone with UMTS (3G) technology incorporated.
- The UMTS network
- Internet
- A server receiving the call through the Internet and broadcasting the video signal through a card with an SDI output (a system compatible with TV equipment)
- Television video broadcasting and management infrastructure.

Each of the parts of the system of the invention is based on standard commercial components of current technology, with the exception of the server, which is what converts the signal sent or recorded from the mobile telephone into a standard video signal compatible with any television system.

Thus in order to implement the system, it is enough to use any 3G mobile telephone, UMTS network, Internet and suitable equipment of the television itself.

The system innovation translates into separating the telephone call in two: unlike the UMTS video-calling technology already implemented, the system of the invention uses different transport systems for the video and audio signal. The audio signal goes through the circuit switching network the video signal through the packet switching network.

Furthermore, the central server will be provided with an appropriate software which will allow said server to act as a production centre, using the signal from the telephone as desired.

Audio is transmitted by means of GSM technology, whereas video is transmitted through the Internet in UDP (User Datagram Protocol) packets.

Audio in turn is coded in the same way as a GSM voice conversation whereas video is coded with the MPEG4 standard in QCIF format at a rate of 9-10 frames/s.

Once both signals are in the server they can be used as desired: either sending them to a production centre and from there sending the recording being made by the mobile live, storing it, editing it, etc.

The system of the invention incorporates an appropriate software application that allows receiving and recording video and audio fragments or streams originating in 3G mobile telephones based on UMTS technology, such that it can receive and record up to six different signals simultaneously, and also act as a navigator, player, editor, etc.

Furthermore, the chosen signal can be converted in real time into an SDI signal (standard rate of 25 frames/s) in order to introduce it into the TV mixer and thus be able to broadcast it live.

Therefore the server is formed by a computer having said software installed with an Internet connection and a professional video/audio card through which the standard video signal compatible with any television system (SDI, PAL or NTSC, SECAM,...) will be taken.

Optionally the possibility of broadcasting images and audio live by means of using video-calling has be provided, in which case both audio and video travel through the switched telephone network in order to reach a video gateway transforming those audio and video packets into an IP stream so that it can travel over the Internet and reach the server with the appropriate software that allows receiving the signal, in order to record it and transform it into a standard video signal on television.

In this case several types of communications occur: the telephone transmitting audio and video indicates to the 3G operator by means of a signaling protocol, that it wishes to transmit an audio and video stream or make the video-call.

Once this communication is accepted, both parties come to an agreement on the type of audio and video formats to be sent.

Subsequently, the protocols of the formats of the frames to be sent are indicated in order to finally carry out the audio and video sending, which can be in different formats.

After this process, the audio and video stream reaches the gateway transforming the audio and video stream into UDP packets so that they can reach the server through the Internet.

Once said signals are received in the server, which will incorporate a specific software with Internet connection and a professional video/audio card by means of which the standard video signal compatible with any television system will be taken, the signals received can be used, as in the previous case, to send them to a production centre and from there to send the recording being made by the mobile live, to store them, to edit them, etc.

The main advantage of the system for live television broadcasting from a mobile telephone of the invention is that it is based on currently existing technology, therefore it is not necessary to develop new infrastructures.

As a clarifying example, it could be said that the carrier of a telephone could be recording any event live, without needing to wait until the mobile unit arrives.

The images captured by the telephone's camera are received in the production centre, and by means of the appropriate software they can be introduced live on any news program.

Another illustrative example is that it could be used to speed up interventions for patients picked up by an ambulance while being taken to the hospital. The carrier of the mobile records the injured parts of the patient. The mobile sends the signal to the hospital, in which a computer with the appropriate programming software is located so that a doctor, from the hospital and based on the images seen through the monitor, can give the appropriate orders to the medical personnel that are in the ambulance so they can act accordingly.

This system implies without a doubt a qualitative and quantitative leap in communications because it makes use of an already developed technology and does not require large investments in order to provide TV stations, news agencies, etc. with a simple and innovating system for broadcasting images live by means of the mobile telephone.

### Description of the Drawings

To complement the description that is being made and with the object of aiding to better understand the features of the invention according to a preferred practical embodiment thereof, a set of drawings is attached as an integral part of said specification in which the following have been represented with an illustrative and non-limiting character:
Figure 1 shows a block diagram in which the configuration of the system for live television broadcasting from a mobile telephone carried out according to the object of the invention is schematically represented.
Figure 2 shows an embodiment variation in which the audio and video signals are sent by means of using video-calling.

### Preferred Embodiment of the Invention

In view of the mentioned figures and according to the numbering used, a preferred embodiment of the system for live television broadcasting from a mobile telephone can be observed therein, comprising the parts that are indicated and described below.

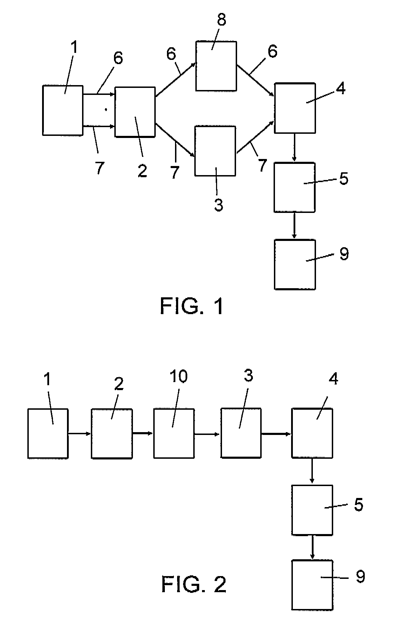

Thus, as observed in the diagram represented in Figure 1, the system for live television broadcasting from a mobile telephone is formed by:
- A mobile telephone (1) with UMTS (3G) technology incorporated.
- The UMTS network (2).
- Internet (3).
- A server (4) formed by a computer terminal provided with the appropriate software to receive the call through the Internet and broadcast the video signal through a card with an SDI output.
- Television video broadcasting and management infrastructure (5).

Therefore the operation of the system consists of separating the telephone call in two, such that it uses different transport systems for the audio signal (6) and the video signal (7).

Thus on one hand, ,audio (6) is transmitted by means of GSM technology (8), whereas video is transmitted through the Internet (3) in UDP (User Datagram Protocol) packets.

Audio is coded in the same way as in a GSM voice conversation, whereas the video is coded with the MPEG4 standard in QCIF format at a rate of 9-10 frames/s.

Once both signals are in the server (4) they can be used as desired: either sending them to a production centre (5) and from there sending them live to the TV screens (9) or storing them, editing them, etc.

According to a second practical embodiment of the invention shown in Figure 2, in which the possibility of broadcasting images and audio live by means of using video-calling has optionally been provided, in said system both the audio signal and the video signal travel through the switched telephone network (2) in order to reach a video gateway (10) transforming those audio and video packets into an IP stream such that it can travel over the Internet (3) and reach the server with the appropriate software that allows receiving the signal, in order to record it and transform it into a standard video signal on television.

Several types of communications thus occur:
The telephone (1) transmitting audio and video indicates to the 3G operator by means of a signaling protocol that it wishes to transmit an audio and video stream or make the video-call.
Once this communication is accepted, both parties come to an agreement on the type of audio and video formats to be sent.
The protocols of the formats of the frames to be sent are subsequently indicated in order to finally carry out the audio and video sending, which audio and video can be in different formats.
After this process, the audio and video stream reaches the gateway (10) transforming the audio and video stream into UDP packets, so that they can reach the server (4) through the Internet (3).
As has been mentioned previously, once signals are received in the server (4), these signals can be used, as in the previous case, to send them to a production centre or any of the television infrastructures (5) and from there to send the recording being carried out by the mobile live to the screens (9) of viewers, to store them, to edit them, etc.

The server (4) will incorporate a specific software with Internet connection and a professional video/audio card by means of which the standard video signal compatible with any television system, such as SDI, PAL or NTSC, SECAM, etc. will be taken.

The mentioned programming software for the server (4) will allow, among other options, the received calls be put on hold and the user being able to select them in order to begin viewing and recording them simultaneously or hanging up on them and canceling them, also having an auto-response function by means of which the system automatically picks up and accepts all incoming calls, recording them in order to later view or distribute them.

It will likewise allow the entrance of several simultaneous calls making it possible to view them on the same or different monitors, including the duration thereof, being able to activate any call so that it appears in real time through a PAL/NTSC video output for broadcasting or recording on a video recorder.

The contents can be easily organized into folders, quickly selectable in different libraries, incorporating the functions of loading, saving, adding, deleting and cleaning the contents of the library.

A function that allows viewing the contents recorded in the system has also been provided. Once a content is selected it can be played/stopped and can be activated so that it appears in real time through a PAL/NTSC video output for externally broadcasting or recording through a broadcast device on a television.

In addition, the mentioned software allows configuring a graphic layer for the PAL/NTSC output in which a graphic in JPG, BMP and/or TGA format, along with the DVE of the video that is being selected, can be formed.

Said software will also allow viewing different videos at the same time by means of an interface with multiple monitors or windows, among which the video that is being broadcast, as well as showing information about the status of the system, in turn showing a trace of the most important actions carried out in the system.

## Claims

1. A system for live television broadcasting from a mobile telephone of the type that allows broadcasting live on television the video and audio signal from a mobile telephone provided with 3G-UMTS technology, using said mobile telephone as a video camera, sending the signal to a central server, which in turn uses it as desired (broadcasting, recording, editing, etc.), **characterized by** comprising a mobile telephone (1) with 3G-UMTS technology incorporated, a server (4) formed by a computer terminal provided with the appropriate software to receive the call through the Internet and broadcast the video signal through a card with an SDI output compatible with TV equipment and the television video broadcasting and management infrastructure (5); which by means of the UMTS network (2) and the Internet (3), separates the audio signal (6) and the video signal (7) into two different transport systems; in that once both signals are in the server (4) they can be used either to send them to a production centre (5) and from there to send live to the TV screens (9), or to store them, to edit them, etc.

2. A system for live television broadcasting from a mobile telephone according to claim 1, **characterized by** the fact that the audio signal (6) is transmitted by means of GSM technology (8), and in that the video signal is transmitted through the Internet (3) in UDP (User Datagram Protocol) packets.

3. A system for live television broadcasting from a mobile telephone according to claims 1 and 2, **characterized by** the fact that the audio signal is coded in the same way as in a GSM voice conversation, and in that the video signal is coded with the MPEG 4 standard system in QCIF format at a rate of 9-10 frames/s.

4. A system for live television broadcasting from a mobile telephone, according to claim 1, **characterized in that** the incorporation of a video gateway (10) into the system has optionally been provided, in the case of sending the images and the audio signal through the mobile telephone (1) by means of using video-calling, which gateway (10) transforms those audio and video packets into an IP stream so that they can travel over the Internet (3) and reach the server (4) with the appropriate software that allows receiving the signal, in order to record it and transform it into a standard video signal on television.
